(19) Europäisches Patentamt / European Patent Office / Office européen des brevets

(11) **EP 3 206 185 B1**

(12) **EUROPEAN PATENT SPECIFICATION**

(45) Date of publication and mention
of the grant of the patent:
**10.03.2021 Bulletin 2021/10**

(21) Application number: **15762465.1**

(22) Date of filing: **20.04.2015**

(51) Int Cl.:
*G06T 5/00* (2006.01)   *G06K 9/00* (2006.01)
*G06K 9/46* (2006.01)   *G06K 9/52* (2006.01)
*G09G 5/02* (2006.01)

(86) International application number:
**PCT/CN2015/076938**

(87) International publication number:
**WO 2016/054904 (14.04.2016 Gazette 2016/15)**

(54) **IMAGE PROCESSING METHOD, IMAGE PROCESSING DEVICE AND DISPLAY DEVICE**

BILDVERARBEITUNGSVERFAHREN, BILDVERARBEITUNGSVORRICHTUNG UND ANZEIGEVORRICHTUNG

PROCÉDÉ DE TRAITEMENT D'IMAGE, DISPOSITIF DE TRAITEMENT D'IMAGE ET DISPOSITIF D'AFFICHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2014 CN 201410534853**

(43) Date of publication of application:
**16.08.2017 Bulletin 2017/33**

(73) Proprietor: **BOE Technology Group Co., Ltd.
Beijing 100015 (CN)**

(72) Inventor: **ZHANG, Xiao
Beijing 100176 (CN)**

(74) Representative: **Cohausz & Florack
Patent- & Rechtsanwälte
Partnerschaftsgesellschaft mbB
Bleichstraße 14
40211 Düsseldorf (DE)**

(56) References cited:
**EP-A1- 2 154 630      EP-A2- 1 742 178
WO-A1-2011/011052     CN-A- 102 473 291
CN-A- 104 202 604     CN-A- 104 299 196
US-A1- 2004 190 789   US-A1- 2004 212 725
US-A1- 2005 093 989   US-A1- 2008 013 800
US-A1- 2008 049 275   US-A1- 2008 279 460
US-A1- 2008 317 358   US-A1- 2009 059 054
US-A1- 2009 290 807**

**Description**

FIELD OF THE INVENTION

The present invention relates to the field of display technology, and particularly relates to an image processing method, an image processing apparatus and a display device.

BACKGROUND OF THE INVENTION

An image acquisition process may be affected by such factors as the size of a dynamic range of an imaging device, ambient light intensity and the like, resulting in such phenomena of an image as lower contrast, inconspicuous image information, color distortion, inadequate target contour or boundary information definition and the like, which brings difficulty to human visual observation and machine analysis and processing, so enhancement processing needs to be carried out on the image.

Image enhancement refers to a processing method in which some information of the image is highlighted according to specific demands, and meanwhile some unwanted information is diminished or removed, so as to improve the visual effect of the image and provide an intuitive and clear image which is suitable for analysis. In general, the image enhancement includes contents in three aspects: contrast enhancement, image sharpening and noise filtering. The contrast enhancement is used for improving the visibility of the image and highlighting information hidden due to such reasons as illumination, exposure and the like. The image sharpening is used for improving the clarity of a target object, for example, highlighting the contour or boundary information for detecting and identifying the target object more easily. The noise filtering is used for diminishing noise effect caused in such processes as imaging and transmission, etc.

In the existing image processing method, the brightness and chroma of the image are adjusted in a unified manner to improve the contrast and saturation of the image. However, people cognize an image scenario, and the existing image processing method lacks pertinency, resulting in deviation between the processed image and the cognition of human eyes on the image. Thus, the existing image processing method has limitation for improving the image quality.

In US2009290807A1, a content-based image processing method and system are provided for images identified as having snow content. Images having dark snow content are identified and processed with a first enhancement chain tailored to enhancing images which would be generally perceived as having dark snow while images having blue snow content are identified and processed with a second enhancement chain tailored to enhancing images which would be generally perceived as having blue snow.

In US2008/013800A1, a method of generating one or more new spatial and chromatic variation digital images uses an original digitally-acquired image which including a face or portions of a face. A group of pixels that correspond to a face within the original digitally-acquired image is identified. A portion of the original image is selected to include the group of pixels. Values of pixels of one or more new images based on the selected portion are automatically generated, or an option to generate them is provided, in a manner which always includes the face within the one or more new images. Such method may be implemented to automatically establish the correct orientation and color balance of an image. Such method can be implemented as an automated method or a semi automatic method to guide users in viewing, capturing or printing of images.

In US2005/093989A1, a CPU 30 generates reduced image data for analytical use from the input image data, analyzes the generated analytical reduced image data on a pixel-by-pixel basis, and acquires R, G, B components of each pixel that constitutes the analytical reduced image data. By using the result of analysis of the analytical reduced image data, the CPU 30 decides a characteristic hue or a hue that characterizes the image data, decides a pixel area that corresponds to the decided characteristic hue, executes a frequency analysis of the analytical reduced image data through the use of e.g. a two-dimensional Fourier transformation, and extracts a texture of the pixel area that corresponds to the characteristic hue. The CPU 30 decides a shooting scene of the shooting image (image data) based on the acquired characteristic hue and the texture of the pixel area that represents the characteristic hue.

US patent application 2008/279460 A1 discloses a scene classification apparatus including: a first partial classifier that determines that a classification target image pertains to a first scene, according to an evaluation result indicating that a partial image pertains to the first scene, by carrying out an evaluation as to whether or not the partial image pertains to the first scene, based on a partial characteristic amount indicating a characteristic of the partial image that constitutes a part of the classification target image; and a second partial classifier that determines that the classification target image pertains to a second scene having a characteristic different from that of the first scene, based on the partial characteristic amount, in the case where it is not determined that the classification target image pertains to the first scene with the first partial classifier; wherein the first partial classifier determines that, in the case where it is not determined that the classification target image pertains to the first scene, according to an evaluation result indicating that the partial image pertains to the first scene, the classification target image does not pertain to the second scene.

SUMMARY OF THE INVENTION

To solve the above problems, the present invention provides an image processing method, an image processing apparatus and a display device, which are used for solving the problem that the image processing method in the prior art has limitation for improving the image quality due to lacking of pertinency.

To this end, the present invention provides an image processing method, including: identifying at least one scenario from an original image; determining an enhancement method corresponding to the scenario; performing image processing on the corresponding scenario through the enhancement method to obtain an enhanced image.

Optionally, the determining an enhancement method corresponding to the scenario includes: extracting feature information from the scenario; matching the feature information with a feature value in a feature database; if the feature information is successfully matched with the feature value in the feature database, determining the category of the scenario according to the matched feature value; inquiring an enhancement method corresponding to the category of the scenario from an enhancement method database, in order to determine the enhancement method corresponding to the scenario.

Optionally, the step of identifying at least one scenario from an original image includes: converting the original image from a first color space into a second color space, the first color space including three components of a red component, a green component and a blue component, and the second color space including one brightness component and two chroma components.

Optionally, the step of identifying at least one scenario from an original image further includes: dividing the original image into a plurality of scenarios in the second color space.

Optionally, the feature information includes a color feature, a texture feature and a transform domain feature, and the step of extracting feature information from the scenario includes: extracting the color feature from the two chroma components; extracting the texture feature and the transform domain feature from the brightness component.

Optionally, the step of performing image processing on the corresponding scenario through the enhancement method to obtain an enhanced image includes: converting the enhanced image from the second color space into the first color space.

The present invention further provides an image processing apparatus, including: an identifying unit, configured to identify at least one scenario from an original image; a determining unit, configured to determine an enhancement method corresponding to the scenario; a processing unit, configured to perform image processing on the corresponding scenario through the enhancement method to obtain an enhanced image.

Optionally, the determining unit includes an extracting module, configured to extract feature information from the scenario; a matching module, configured to match the feature information with a feature value in a feature database; a determining module configured to, if the feature information is successfully matched with the feature value in the feature database, determine the category of the scenario according to the matched feature value; an inquiring module, configured to inquire an enhancement method corresponding to the category of the scenario from an enhancement method database, in order to determine the enhancement method corresponding to the scenario.

Optionally, the identifying unit includes: a first converting module, configured to convert the original image from a first color space into a second color space, the first color space including three components of a red component, a green component and a blue component, and the second color space including one brightness component and two chroma components.

Optionally, the identifying unit further includes: a dividing module, configured to divide the original image into a plurality of scenarios in the second color space.

Optionally, the feature information includes a color feature, a texture feature and a transform domain feature, and the extracting module includes: a first extracting sub-module, configured to extract the color feature from the two chroma components; a second extracting sub-module, configured to extract the texture feature and the transform domain feature from the brightness component.

Optionally, the processing unit includes: a second converting unit, configured to convert the enhanced image from the second color space into the first color space.

The present invention further provides a display device, including any one of the above-mentioned image processing apparatuses.

The present invention has the following beneficial effects:

in the image processing method, the image processing apparatus and the display device provided by the present invention, a plurality of scenarios are identified from the original image, the enhancement method corresponding to each of the scenarios is determined, and image processing is performed on the corresponding scenario through the enhancement method to obtain the enhanced image. According to the features of different scenarios, different image processing methods are pointedly adopted to enable the processed image to better conform to the cognition of human eyes on the image, so as to achieve an optimal image display effect.

BRIEF DESCRIPTION OF THE DRAWINGS

Fig.1 is a flowchart of an image processing method in the present invention; and
Fig.2 is a schematic diagram of a structure of an image processing apparatus in the present invention.

DETAILED DESCRIPTION OF THE EMBODIMENTS

In order that those skilled in the art can better understand the technical solutions of the present invention, an image processing method, an image processing apparatus and a display device provided by the present invention will be described below in detail in combination with the accompanying drawings.

First embodiment

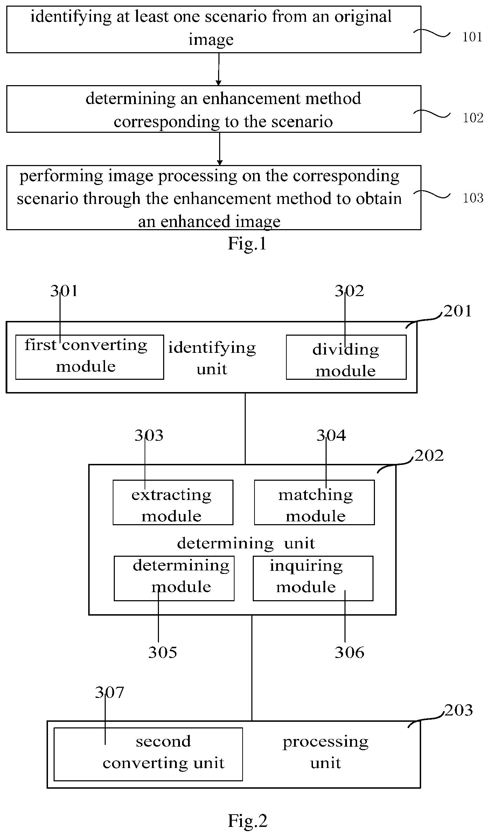

Fig.1 is a flowchart of an image processing method in the present invention. As shown in Fig.1, the method includes:
step 101, at least one scenario is identified from an original image.
Optionally, the step 101 includes: converting the original image from a first color space into a second color space, the first color space including three components of a red component, a green component and a blue component, the second color space including one brightness component and two chroma components, the brightness component being used for describing the gray scale information of the image, and the two chroma components being used for describing the color and saturation information. In practical application, image information collected by an image collecting device is information describing various pixel points of the image in the first color space, and in order to avoid loss of the image information in the image processing process, the image can be converted from the first color space into the second color space.
In the embodiment, the original image is divided into a plurality of scenarios in the second color space. One purpose for performing scenario division on the original image in the second color space is to identify different scenarios in the original image. Only when the different scenarios in the original image are identified at first, different image processing methods can be pointedly adopted according to the features of different scenarios to enable the processed image to better conform to the cognition of human eyes on the image, so as to achieve an optimal image display effect. It can be understood that, considering from the perspective of reducing the calculation amount, it is possible to identify only a certain specific scenario, for example, this scenario being one having larger visual impact in a viewing process of the user, and then to enhance the scenario.
Step 102, an enhancement method corresponding to the scenario is determined.
In the embodiment, feature information can be extracted from the scenario, and the feature information may include a color, a shape, a texture and a spatial relationship, wherein the color feature information is mainly extracted from the two chroma components, while the shape feature information, the texture feature information and the spatial relationship feature information are mainly extracted from the brightness component.
Preferably, the feature information includes a color feature, a texture feature and a transform domain feature, the color feature being extracted from the two chroma components, and the texture feature and the transform domain feature being extracted from the brightness component.
In the embodiment, the texture feature includes 7 features:

1) angular second moment

$$f_1 = \sum_{i=0}^{L-1} \sum_{j=0}^{L-1} [p(i,j)]^2$$

the angular second moment expresses a quadratic sum of elements in a grey level co-occurrence, and is also called energy. The angular second moment is used for measuring the uniformity of texture gray scale change of the image to reflect the uniformity coefficient and texture roughness of gray scale distribution of the image, wherein $p(i, j)$ expresses the gray scale of a two-dimensional image at a point (i, j), and the gray scale of the image is generally expressed by 256 levels, L=1,2,...,256
2) Contrast

$$f_2 = \sum_{i=0}^{L-1} \sum_{j=0}^{L-1} n^2 p(i,j)$$,

n represents a difference between a row position and a column position.

The contrast is used for reflecting the definition of the image and the depth of a texture ditch. The deeper the texture ditch is, the larger the contrast is, the clearer the picture display of the image is; the shallower the texture ditch is, the smaller the contrast is, the fuzzier the picture display of the image is.

3) Correlation

$$f_3 = \frac{1}{\sigma_1 \sigma_2} \sum_{i=0}^{L-1} \sum_{j=0}^{L-1} ijp(i,j) - u_1 u_2$$

wherein

$$u_1 = \sum_{i=0}^{L-1} i \sum_{j=0}^{L-1} p(i,j)$$, $$u_2 = \sum_{i=0}^{L-1} j \sum_{j=0}^{L-1} p(i,j)$$,

$$\sigma_1^2 = \sum_{i=0}^{L-1} (i-u_1)^2 \sum_{j=0}^{L-1} p(i,j)$$,

$$\sigma_2^2 = \sum_{i=0}^{L-1} (j-u_2)^2 \sum_{j=0}^{L-1} p(i,j)$$.

4) Entropy

$$f_4 = \sum_{i=0}^{L-1} \sum_{j=0}^{L-1} \{p(i,j) \log p(i,j)\}$$

the entropy is a description of the randomness of the textures of the image and reflects the ununiformity degree and complexity of the textures in the image.

5) Variance

$$f_5 = \sum_{i=0}^{L-1} \sum_{j=0}^{L-1} (i-u)^2 p(i,j)$$

wherein $u = \sum_{i=0}^{L-1} \sum_{j=0}^{L-1} p(i,j)$ is a mean of $p(i,j)$

6) Inverse difference moment

$$f_6 = \sum_{i=0}^{L-1} \sum_{j=0}^{L-1} \frac{p(i,j)}{1+(i-j)^2}$$

The inverse difference moment is used for measuring the local texture change of the image, and the larger the numerical value of the inverse difference moment is, the more uniform and the smaller the change of the local textures of the image are.

7) First average correlation information

$$f_7 = \frac{HXY - HXY1}{\max\{HX, HY\}},$$

and
Second average correlation information

$$f_8 = \left\{1 - \exp[-0.2(HXY2 - HXY)]\right\}^{1/2}$$

wherein

$$HXY = -\sum_{i=0}^{L-1}\sum_{j=0}^{L-1} p(i,j)\log(p(i,j))$$

$$HXY1 = -\sum_{i=0}^{L-1}\sum_{j=0}^{L-1} p(i,j)\log\{p_x(i)p_y(j)\};$$

$$HXY2 = -\sum_{i=0}^{L-1}\sum_{j=0}^{L-1} p_x(i)p_y(j)\log\{p_x(i)p_y(j)\};$$

$$HX = \sum_{i=0}^{L-1} \log[p_x(i)],$$

$$HY = \sum_{j=0}^{L-1} \log[p_y(j)];$$

$$p_x(\mathrm{i}) = \sum_{j=0}^{L-1} p(\mathrm{i},\mathrm{j}),$$

$$p_y(\mathrm{j}) = \sum_{i=0}^{L-1} p(\mathrm{i},\mathrm{j}).$$

The above-mentioned 7 specific features of the texture feature are extracted from the brightness component to express the texture feature more accurately, so as to determine the enhancement method corresponding to the scenario more accurately.

In the embodiment, the transform domain feature in the feature information can be extracted from the scenario. The transform domain feature is obtained by Gabor transform. The Gabor transform is developed on the basis of Fourier transform, essentially by adding a window function expressing time to the Fourier transform to provide a time-varying signal of a signal spectrum. When the window function is a Gaussian function, the Fourier transform becomes the Gabor transform. Extracting the transform domain feature from the original image through the Gabor transform is achieved by performing convolution on the original image and a Gabor filter, the Gabor filter including a Gabor sub-band filter, and the Gabor transform including Gabor wavelet transform. When an original image $f(x,y)$ (wherein $f(x,y)$ is a gray value on a pixel position $(x, y)$) is given, the Gabor wavelet transform of the original image may be expressed as:

$$w_{mn}(x, y) = f(x, y) * g_{mn}(x, y)$$

wherein * expresses convolution, $g_{mn}(x,y)$ expresses Gabor sub-band filter group with different scales and different directions, where m represents the series of the scale and n represents the direction. When the scale and the direction are given, a Gabor transform sub-band image of the original image can be obtained. In the embodiment, a filter group composed of 24 Gabor sub-band filters formed by 3 scales and 8 directions is adopted, and the above-mentioned Gabor sub-band filter group can be used for obtaining the transform domain feature composed of 48 feature vectors.

In the embodiment, the feature information is matched with a feature value in a feature database; if the feature information is successfully matched with the feature value in the feature database, the category of the scenario is determined according to the matched feature value; and an enhancement method corresponding to the category of the scenario is inquired from an enhancement method database. The feature database is a database established by the feature values of a plurality of scenarios. The scenario in the embodiment can be divided according to scenery, and includes, for example, sky, water surfaces, plants, white snow, buildings, etc. Of course, in practical application, the scenario can also be divided into other scenarios according to other reference. The enhancement method database is a database established by enhancement methods corresponding to different scenarios. The enhancement method includes such processing methods as contrast enhancement, image denoising, edge sharpening, color enhancement, etc. The enhancement method corresponding to the scenario is used for pointedly processing the image (for example, enhancing the plants by using a color enhancement method, processing the buildings by using an edge sharpening method, and the like), to enable the processed image to better conform to the cognition of human eyes on the image, so as to achieve the optimal image display effect.

Step 103, image processing is performed on the corresponding scenario through the enhancement method to obtain an enhanced image.

In the embodiment, the original image is pointedly processed to obtain the enhanced image. Since a display system generally adopts the first color space, the enhanced image still needs to be converted into the first color space so as to achieve displaying of the image.

In the image processing method provided by the present invention, a plurality of scenarios are identified from the original image, the enhancement method corresponding to each of the scenarios is determined, and image processing is performed on the corresponding scenario through the enhancement method to obtain the enhanced image. According to the features of different scenarios, different image processing methods are pointedly adopted to enable the processed image to better conform to the cognition of human eyes on the image, so as to achieve the optimal image display effect.

Second embodiment

Fig.2 is a schematic diagram of a structure of an image processing apparatus in the present invention. As shown in Fig.2, the image processing apparatus includes: an identifying unit 201, a determining unit 202 and a processing unit 203. The identifying unit 201 is configured to identify a plurality of scenarios from an original image; the determining unit 202 is configured to determine an enhancement method corresponding to the identified scenario; and the processing unit 203 is configured to perform image processing on the corresponding scenario through the enhancement method to obtain an enhanced image. It can be understood that, considering from the perspective of reducing the calculation amount, it is possible for the identifying unit 201 to only identify a certain specific scenario, for example, this scenario being one having larger visual impact in a viewing process of the user, and then to enhance the scenario.

Optionally, the identifying unit 201 includes a first converting module 301, wherein the first converting module 301 is configured to convert the original image from a first color space into a second color space, the first color space including three components of a red component, a green component and a blue component, and the second color space including one brightness component and two chroma components, the brightness component being used for describing the gray scale information of the image, and the two chroma components being used for describing the color and saturation information. In practical application, image information collected by an image collecting device is information describing various pixel points of the image in the first color space, and in order to avoid loss of the image information in the image processing process, the image may be converted from the first color space into the second color space.

The identifying unit 201 further includes a dividing module 302, and the dividing module 302 is configured to divide the original image into a plurality of scenarios in the second color space. In the embodiment, one purpose for performing scenario division on the original image in the second color space is to identify different scenarios in the original image. Only when different scenarios in the original image are identified at first, different image processing methods can be pointedly adopted according to the features of different scenarios to enable the processed image to better conform to the cognition of human eyes on the image, so as to achieve an optimal image display effect.

The determining unit 202 includes an extracting module 303, a matching module 304, a determining module 305 and an inquiring module 306. The extracting module 303 is configured to extract feature information from the scenario, and the feature information can include a color, a shape, a texture and a spatial relationship, wherein the color feature information is mainly extracted from the two chroma components, while the shape feature information, the texture feature information and the spatial relationship feature information are mainly extracted from the brightness component. Preferably, the feature information includes a color feature, a texture feature and a transform domain feature, the extracting module 303 includes a first extracting sub-module and a second extracting sub-module. The first extracting sub-module is configured to extract the color feature from the two chroma components, and the second extracting sub-module is configured to extract the texture feature and the transform domain feature from the brightness component. For the specific contents of the texture feature and the transform domain feature, reference can be made to descriptions in the above-mentioned first embodiment, and it will not be repeated redundantly herein.

In the embodiment, the matching module 304 is configured to match the feature information with a feature value in a feature database; the determining module 305 is configured to, if the feature information is successfully matched with the feature value in the feature database, determine the category of the scenario according to the matched feature value; and the inquiring module 306 is configured to inquire an enhancement method corresponding to the category of the scenario from an enhancement method database. The feature database is a database established by the feature values of a plurality of scenarios. The scenario in the embodiment can be divided according to scenery, and includes, for example, sky, water surfaces, plants, white snow, buildings, etc. Of course, in practical application, the scenario can also be divided into other scenarios according to other reference. The enhancement method database is a database established by enhancement methods corresponding to different scenarios. The enhancement method includes such processing methods as contrast enhancement, image denoising, edge sharpening, color enhancement, etc. The enhancement method corresponding to the scenario is used for pointedly processing the image to enable the processed image to better conform to the cognition of human eyes on the image, so as to achieve the optimal image display effect.

In the embodiment, the processing unit 203 includes a second converting module 307, and the second converting module 307 is configured to convert the enhanced image from the second color space into the first color space. The original image is pointedly processed to obtain the enhanced image. Since a display system generally adopts the first color space, the enhanced image still needs to be converted into the first color space so as to achieve displaying of the image.

In the image processing apparatus provided by the present invention, a plurality of scenarios are identified from the original image, the enhancement method corresponding to each of the scenarios is determined, and image processing is performed on the corresponding scenario through the enhancement method to obtain the enhanced image. According to the features of different scenarios, different image processing methods are pointedly adopted to enable the processed image to better conform to the cognition of human eyes on the image, so as to achieve the optimal image display effect.

Third embodiment

The embodiment provides a display device, including the image processing apparatus provided by the second embodiment, and for specific contents, reference can be made to the description in the second embodiment, and it will not be repeated redundantly herein.

In the display device provided by the present invention, a plurality of scenarios are identified from the original image, the enhancement method corresponding to each of the scenarios is determined, and image processing is performed on the corresponding scenario through the enhancement method to obtain the enhanced image. According to the features of different scenarios, different image processing methods are pointedly adopted to enable the processed image to better conform to the cognition of human eyes on the image, so as to achieve an optimal image display effect.

It can be understood that the foregoing embodiments are merely exemplary embodiments used for illustrating the principle of the present invention, but the present invention is not limited hereto. Those of ordinary skill in the art can make various modifications and improvements without departing from the scope of the appended claims.

**Claims**

1. An image processing method, comprising:

    identifying at least one scenario from an original image;

determining an enhancement method corresponding to the scenario;
performing image processing on the corresponding scenario through the enhancement method to obtain an enhanced image,
wherein the step of identifying at least one scenario from an original image comprises:
converting the original image from a first color space into a second color space, the first color space comprising three components of a red component, a green component and a blue component, and the second color space comprising one brightness component and two chroma components, **characterized in that** the step of determining an enhancement method corresponding to the scenario comprises:

extracting feature information from the scenario;
matching the feature information with a feature value in a feature database;
determining the category of the scenario according to the matched feature value, if the feature information is successfully matched with the feature value in the feature database; and
inquiring an enhancement method corresponding to the category of the scenario from an enhancement method database, in order to determine the enhancement method corresponding to the scenario.

2. The image processing method of claim 1, wherein the step of identifying at least one scenario from an original image further comprises:
dividing the original image into a plurality of scenarios in the second color space.

3. The image processing method of claim 1, wherein the feature information comprises a color feature, a texture feature and a transform domain feature, and the step of extracting feature information from the scenario comprises:

extracting the color feature from the two chroma components; and
extracting the texture feature and the transform domain feature from the brightness component.

4. The image processing method of claim 1, wherein the step of performing image processing on the corresponding scenario through the enhancement method to obtain an enhanced image comprises:
converting the enhanced image from the second color space into the first color space.

5. An image processing apparatus, comprising:

an identifying unit (201), configured to identify at least one scenario from an original image;
a determining unit (202), configured to determine an enhancement method corresponding to the scenario; and
a processing unit (203), configured to perform image processing on the corresponding scenario through the enhancement method to obtain an enhanced image,
wherein the identifying unit (201) comprises:
a first converting module (301), configured to convert the original image from a first color space into a second color space, the first color space comprising three components of a red component, a green component and a blue component, and the second color space comprising one brightness component and two chroma components, **characterized in that** the determining unit (202) comprises:

an extracting module (303), configured to extract feature information from the scenario;
a matching module (304), configured to match the feature information with a feature value in a feature database;
a determining module (305), configured to determine the category of the scenario according to the matched feature value if the feature information is successfully matched with the feature value in the feature database;
an inquiring module (306), configured to inquire an enhancement method corresponding to the category of the scenario from an enhancement method database, in order to determine the enhancement method corresponding to the scenario.

6. The image processing apparatus of claim 5, wherein the identifying unit (201) further comprises:
a dividing module (302), configured to divide the original image into a plurality of scenarios in the second color space.

7. The image processing apparatus of claim 5, wherein the feature information comprises a color feature, a texture feature and a transform domain feature, and the extracting module comprises:

a first extracting sub-module, configured to extract the color feature from the two chroma components; and

a second extracting sub-module, configured to extract the texture feature and the transform domain feature from the brightness component.

**8.** The image processing apparatus of claim 5, wherein the processing unit (203) comprises:
a second converting unit (307), configured to convert the enhanced image from the second color space into the first color space.

**9.** A display device, comprising the image processing apparatus of any one of claims 5-8.

**Patentansprüche**

**1.** Bildverarbeitungsverfahren, umfassend:

Identifizieren mindestens eines Szenarios aus einem Originalbild;
Bestimmen eines Verbesserungsverfahrens, das dem Szenario entspricht;
Durchführen einer Bildverarbeitung an dem entsprechenden Szenario durch das Verbesserungsverfahren, um ein verbessertes Bild zu erhalten,
wobei der Schritt des Identifizierens mindestens eines Szenarios aus einem Originalbild umfasst:

Konvertieren des Originalbildes von einem ersten Farbraum in einen zweiten Farbraum, wobei der erste Farbraum drei Komponenten einer Rotkomponente, einer Grünkomponente und einer Blaukomponente umfasst, und der zweite Farbraum eine Helligkeitskomponente und
zwei Chromakomponenten umfasst,
**dadurch gekennzeichnet, dass**
der Schritt des Bestimmens eines Verbesserungsverfahrens, das dem Szenario entspricht, umfasst:

Extrahieren von Merkmalsinformationen aus dem Szenario;
Abgleichen der Merkmalsinformationen mit einem Merkmalswert in einer Merkmalsdatenbank;
Bestimmen der Kategorie des Szenarios gemäß dem abgeglichenen Merkmalswert, wenn die Merkmalsinformationen erfolgreich mit dem Merkmalswert in der Merkmalsdatenbank abgeglichen wurden; und
Abfragen eines Verbesserungsverfahrens, das der Kategorie des Szenarios entspricht, von einer Verbesserungsverfahrendatenbank, um das Verbesserungsverfahren zu bestimmen, das dem Szenario entspricht.

**2.** Bildverarbeitungsverfahren nach Anspruch 1, wobei der Schritt des Identifizierens mindestens eines Szenarios aus einem Originalbild ferner umfasst: Aufteilen des Originalbildes in mehrere Szenarien in dem zweiten Farbraum.

**3.** Bildverarbeitungsverfahren nach Anspruch 1, wobei die Merkmalsinformationen ein Farbmerkmal, ein Texturmerkmal und ein Transformationsbereichsmerkmal umfassen, und der Schritt des Extrahierens von Merkmalsinformationen aus dem Szenario umfasst:

Extrahieren des Farbmerkmals aus den beiden Chromakomponenten; und
Extrahieren des Texturmerkmals und des Transformationsbereichsmerkmals aus der Helligkeitskomponente.

**4.** Bildverarbeitungsverfahren nach Anspruch 1, wobei der Schritt des Durchführens einer Bildverarbeitung an dem entsprechenden Szenario durch das Verbesserungsverfahren, um ein verbessertes Bild zu erhalten, umfasst:
Konvertieren des verbesserten Bildes aus dem zweiten Farbraum in den ersten Farbraum.

**5.** Bildverarbeitungsvorrichtung, aufweisend:

eine Identifizierungseinheit (201), die konfiguriert ist, um mindestens ein Szenario aus einem Originalbild zu identifizieren;
eine Bestimmungseinheit (202), die konfiguriert ist, um ein Verbesserungsverfahren zu bestimmen, das dem Szenario entspricht; und
eine Verarbeitungseinheit (203), die konfiguriert ist, um eine Bildverarbeitung an dem entsprechenden Szenario durch das Verbesserungsverfahren durchzuführen, um ein verbessertes Bild zu erhalten, wobei die Identifizierungseinheit (201) aufweist:

ein erstes Konvertierungsmodul (301), das konfiguriert ist, um das Originalbild von einem ersten Farbraum in einen zweiten Farbraum zu konvertieren, wobei der erste Farbraum drei Komponenten einer Rotkomponente, einer Grünkomponente und einer Blaukomponente umfasst, und der zweite Farbraum eine Helligkeitskomponente und zwei Chromakomponenten umfasst,
**dadurch gekennzeichnet, dass**
die Bestimmungseinheit (202) aufweist:

ein Extraktionsmodul (303), das konfiguriert ist, um Merkmalsinformationen aus dem Szenario zu extrahieren;
ein Abgleichmodul (304), das konfiguriert ist, um die Merkmalsinformationen mit einem Merkmalswert in einer Merkmalsdatenbank abzugleichen;
ein Bestimmungsmodul (305), das konfiguriert ist, um die Kategorie des Szenarios gemäß dem abgeglichenen Merkmalswert zu bestimmen, wenn die Merkmalsinformationen erfolgreich mit dem Merkmalswert in der Merkmalsdatenbank abgeglichen wurden;
ein Abfragemodul (306), das konfiguriert ist, um ein Verbesserungsverfahren, das der Kategorie des Szenarios entspricht, aus einer Verbesserungsverfahrendatenbank abzufragen, um das Verbesserungsverfahren zu bestimmen, das dem Szenario entspricht.

6. Bildverarbeitungsvorrichtung nach Anspruch 5, wobei die Identifizierungseinheit (201) ferner aufweist: ein Aufteilungsmodul (302), das so konfiguriert ist, dass es das Originalbild in mehrere Szenarien in dem zweiten Farbraum aufteilt.

7. Die Bildverarbeitungsvorrichtung nach Anspruch 5, wobei die Merkmalsinformationen ein Farbmerkmal, ein Texturmerkmal und ein Transformationsbereichsmerkmal umfassen, und das Extraktionsmodul aufweist:

ein erstes Extraktionsuntermodul, das konfiguriert ist, um das Farbmerkmal aus den beiden Chromakomponenten zu extrahieren; und
ein zweites Extraktionsuntermodul, das konfiguriert ist, um das Texturmerkmal und das Transformationsbereichsmerkmal aus der Helligkeitskomponente zu extrahieren.

8. Bildverarbeitungsvorrichtung nach Anspruch 5, wobei die Verarbeitungseinheit (203) aufweist:
eine zweite Konvertierungseinheit (307), die konfiguriert ist, um das verbesserte Bild von dem zweiten Farbraum in den ersten Farbraum zu konvertieren.

9. Anzeigevorrichtung, die Bildverarbeitungsvorrichtung nach einem der Ansprüche 5 bis 8 aufweisend.

## Revendications

1. Procédé de traitement d'image, comprenant les étapes consistant à :

identifier au moins un scénario à partir d'une image originale ;
déterminer une méthode d'amélioration correspondant au scénario ;
effectuer un traitement d'image sur le scénario correspondant par le biais du procédé d'amélioration pour obtenir une image améliorée,
dans lequel l'étape d'identification d'au moins un scénario à partir d'une image originale comprend les étapes consistant à :

convertir l'image originale d'un premier espace colorimétrique en une seconde colonne ou espace, le premier espace colorimétrique comprenant trois composants d'un composant rouge, un composant vert et un composant bleu, et le second espace colorimétrique comprenant un composant de luminosité et deux composants de chrominance,
**caractérisé en ce que** l'étape de détermination d'un procédé de valorisation correspondant au scénario comprend les étapes consistant à :

extraire des informations de caractéristique du scénario ;

faire correspondre les informations de caractéristique avec une valeur de caractéristique dans une base de données de caractéristiques ;

déterminer la catégorie du scénario selon la valeur de caractéristique correspondante, si les informations de caractéristique sont mises en correspondance avec succès avec la valeur de caractéristique dans la base de données de caractéristiques ; et

demander un procédé de valorisation correspondant à la catégorie du scénario à partir d'une base de données de procédés de valorisation, afin de déterminer le procédé de valorisation correspondant au scénario.

2. Procédé de traitement d'image selon la revendication 1, dans lequel l'étape d'identification d'au moins un scénario à partir d'une image originale comprend en outre l'étape consistant à :
diviser l'image originale en une pluralité de scénarios dans le deuxième espace colorimétrique.

3. Procédé de traitement d'image selon la revendication 1, dans lequel les informations de caractéristique comprennent une caractéristique de couleur, une caractéristique de texture et une caractéristique de domaine de transformation, et l'étape d'extraction des informations de caractéristique du scénario comprend les étapes consistant à :

extraire la caractéristique de couleur des deux composants de chrominance ; et
extraire la fonction de texture et de la fonction de domaine de transformation à partir du composant de luminosité.

4. Procédé de traitement d'image selon la revendication 1, dans lequel l'étape d'exécution d'un traitement d'image sur le scénario correspondant par le biais du procédé d'amélioration pour obtenir une image améliorée comprend :
la conversion de l'image améliorée de la deuxième colonne ou espace dans le premier espace couleur.

5. Appareil de traitement d'image, comprenant :

une unité d'identification (201), configurée pour identifier au moins un scénario à partir d'une image originale ;
une unité de détermination (202), configurée pour déterminer une méthode d'amélioration correspondant au scénario ; et
une unité de traitement (203), configurée pour effectuer un traitement d'image sur le scénario correspondant par le biais du procédé d'amélioration pour obtenir une image améliorée,
dans lequel l'unité d'identification (201) comprend :

un premier module de conversion (301), configuré pour convertir l'image originale d'un premier espace colorimétrique en un second espace colorimétrique, le premier espace colorimétrique comprenant trois composants d'un composant rouge, un composant vert et un composant bleu, et le second espace colorimétrique comprenant un composant de luminosité et deux composants de chrominance,
**caractérisé en ce que** l'unité de détermination (202) comprend :

un module d'extraction (303), configuré pour extraire des informations de caractéristiques du scénario ;
un module de correspondance (304), configuré pour faire correspondre les informations de caractéristique avec une valeur de caractéristique dans une base de données de caractéristiques ;
un module de détermination (305), configuré pour déterminer la catégorie du scénario en fonction de la valeur de caractéristique correspondante si les informations de caractéristique sont mises en correspondance avec la valeur de caractéristique dans la base de données de caractéristiques ;
un module d'interrogation (306), configuré pour demander un procédé d'amélioration correspondant à la catégorie du scénario à partir d'une base de données de procédé d'amélioration, afin de déterminer le procédé d'amélioration correspondant au scénario.

6. Appareil de traitement d'image selon la revendication 5, dans lequel l'unité d'identification (201) comprend en outre :
un module de division (302), configuré pour diviser l'image originale en une pluralité de scénarios dans le second espace colorimétrique.

7. Appareil de traitement d'image selon la revendication 5, dans lequel les informations de caractéristique comprennent une caractéristique de couleur, une caractéristique de texture et une caractéristique de domaine de transformation, et le module d'extraction comprend :

un premier sous-module d'extraction, configuré pour extraire la caractéristique de couleur des deux composantes de chrominance ; et
un deuxième sous-module d'extraction, configuré pour extraire la caractéristique de texture et la caractéristique de domaine de transformation du composant de luminosité.

8. Appareil de traitement d'image selon la revendication 5, dans lequel l'unité de traitement (203) comprend :
une seconde unité de conversion (307), configurée pour convertir l'image améliorée du second espace colorimétrique dans le premier espace colorimétrique.

9. Dispositif d'affichage, comprenant l'appareil de traitement d'image selon l'une quelconque des revendications 5 à 8.

identifying at least one scenario from an original image ⟩∼ 101

determining an enhancement method corresponding to the scenario ⟩∼ 102

performing image processing on the corresponding scenario through the enhancement method to obtain an enhanced image ⟩∼ 103

Fig.1

301 302 ⟋201

| first converting module | identifying unit | dividing module |

303 304 ⟋202

| extracting module | | matching module |

determining unit

| determining module | | inquiring module |

305 306

307 ⟋203

| second converting unit | processing unit |

Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009290807 A1
- US 2008013800 A1
- US 2005093989 A1
- US 2008279460 A1